# EUROPÄISCHE PATENTSCHRIFT

(11) **EP 2 544 885 B1**
(45) Veröffentlichungstag und Bekanntmachung des Hinweises auf die Patenterteilung: **20.01.2021**
(21) Anmeldenummer: 11711759.8
(22) Anmeldetag: 01.03.2011
(51) Int. Cl.: B29D 11/00

(54) **VERFAHREN ZUR HERSTELLUNG EINES BRILLENGLASES**
METHOD FOR MANUFACTURING A SPECTACLE LENS
METHODE DE FABRICATION D'UN VERRE DE LUNETTE

(30) Priorität: 09.09.2010 DE 102010044893; 10.03.2010 DE 102010010930
(43) Veröffentlichungstag der Anmeldung: 16.01.2013
(73) Patentinhaber: Rodenstock GmbH, 80687 München (DE)
(72) Erfinder: KNÖFERLE, Johannes, 85570 Markt Schwaben (DE)
(74) Vertreter: Müller-Boré & Partner Patentanwälte PartG mbB
(86) Internationale Anmeldenummer: PCT/EP2011/001000
(87) Internationale Veröffentlichungsnummer: WO 2011/110300

(56) Entgegenhaltungen:
- EP-A1- 0 143 253
- EP-A1- 1 426 158
- GB-A- 2 040 213
- US-A1- 2002 195 732
- US-A1- 2007 243 287

## Beschreibung

Die vorliegende Erfindung betrifft eine verbesserte Herstellung eines Brillenglases für einen Brillenträger unter Nutzung einer Gießform, insbesondere einer Kunststoffgießform, mit integriertem Blockstück.

Der Herstellungsprozess eines Rezeptbrillenglases besteht herkömmlich aus dem Gießen eines Blanks als Vorprodukt, dessen Lagerung und Distribution in großen Mengen, der mechanischen Bearbeitung in der Rezeptglasfertigung (RGF) und weiteren Veredelungsschritten wie Färben, Hartbeschichten, Entspiegeln, Formranden und Montieren in eine Fassung. Für das Gießen werden in der Regel Glasformen benutzt, die entweder mittels eines Gummiringes oder eines Klebebandes abgedichtet werden und so die spätere Form des Blanks umschließen. Für die mechanische Bearbeitung werden die Blanks auf einem Block (Maschinenspannstück) als Halter oder Haltevorrichtung angebracht. Für die einzelnen Verfahrensschritte bei der Bearbeitung gibt es verfahrensbedingt eine Vielzahl von Haltern und Werkstückträgern zur Aufnahme des zu bearbeitenden Glases.

Um eine hohe Zahl erforderlicher Rezeptwirkungen abdecken zu können und gleichzeitig die Anzahl vorrätig zu haltenden Blanks begrenzen zu können, werden die Blanks in groben Abstufungen ihrer Durchmesser in Serie hergestellt und gelagert, d.h. zur Limitierung der lagerbaren Varianten ist ein relativ großes Aufmaß bei der Herstellung der Blanks notwendig. Für das fertige Brillenglas kommen in der Regel nur etwa 10% bis 15% des Blankmaterials zum Einsatz. Der Großteil des teuren Materials wird in der RGF zerspant. Ein Recycling ist nicht möglich. Die dennoch erforderliche Variantenvielfalt der vorrätig zu haltenden Blanks erzeugt eine hohe Kapitalbindung in den Lagern und einen hohen logistischen Aufwand.

Der Blockprozess in der RGF benutzt zum Anbringen des Blanks ein niedrigschmelzendes Metall ("Alloy"), das nicht zerspant werden kann. Um ein Verschmieren der Werkzeuge durch das Alloy bei der RGF zu verhindern, wird das Blockstück im Vergleich zu den üblichen Brillenglasgrößen vergleichsweise klein gehalten. Dies ist vor allem wichtig, wenn dickenoptimierte Gläser gefertigt werden sollen. Besonders bei stark ovalen Glasformen ergibt dies Gläser, die weit über den Block überstehen und dort sehr dünn sind. Dies wiederum führt zum Nachgeben des Glases beim Bearbeiten und damit zu optisch fehlerhaften Gläsern oder sogar zum Bruch. Das in der Regel bleihaltige Alloy ist umwelttechnisch nicht unbedenklich und darf damit nicht ins Abwasser gelangen.

Die weiteren Verfahren der RGF bedingen wegen der Inhomogenität der verwendeten Prozesse häufige Werkstückträgerwechsel und damit einen hohen Aufwand.

Ein alternatives herkömmliches Verfahren, das sogenannte Rezeptgießverfahren, kommt ohne eine mechanische Bearbeitung in der Rezeptglasfertigung aus. Statt dessen werden die Brillengläser mittels vorgefertigter Gussformen und unter Verwendung UV-härtender Polymere direkt in die gewünschte Form hinsichtlich der Vorder- und Rückfläche gegossen.

GB 2 040 213 A beschreibt die Herstellung von Kunststofflinsen durch eine zweiteilige Gießform. Dabei sind in einem ersten Teil der Gießform eine Vielzahl von Gießhohlräumen ausgebildet, welche durch einen zweiten Teil der Gießform verschlossen werden können. Mittels dieser Konstruktion der Gießformteile können mehrere Kunststofflinsen nebeneinander angeordnet gleichzeitig in der Gießform hergestellt werden. Nach dem Aushärten der Kunststofflinsen werden diese an zumindest einer Seite poliert oder geschliffen, ohne vorher aus der Gießform entnommen zu werden.

Es ist Aufgabe der vorliegenden Erfindung die Herstellung von individuellen Brillengläsern für einen Brillenträger zu vereinfachen, ohne wesentliche Einbußen in der Qualität hinnehmen zu müssen. Diese Aufgabe wird durch ein Verfahren zur Herstellung eines Brillenglases mit den im Anspruch 1 angegebenen Merkmalen gelöst. Bevorzugte Ausführungsformen sind Gegenstand der abhängigen Ansprüche.

Insbesondere bietet die Erfindung somit ein Verfahren zur Herstellung eines Brillenglases für einen Brillenträger, umfassend ein Bereitstellen, insbesondere ein Herstellen, einer ersten Gießform und einer zweiten Gießform, wobei die erste Gießform ein von einer ersten Gießformfläche der ersten Gießform abgewandtes Blockstück, das auch Block genannt wird und als Halteeinrichtung ausgelegt ist umfasst. Das Blockstück ist also eine Halteeinrichtung zum Halten der ersten Gießform in bzw. mittels einer oder verschiedener Bearbeitungsmaschinen. Dabei sind eine die Gießformfläche bildende Gießformschale und das Blockstück vorzugsweise einstückig ausgebildet.

Außerdem umfasst das erfindungsgemäße Verfahren ein Zusammenfügen der ersten und zweiten Gießform unter Bildung eines Gießhohlraum und ein Ausgießen des Gießhohlraums zur Ausbildung eines Brillenglasrohlings. Schließlich umfasst das Verfahren ein Rezeptschleifen einer Fläche des Brillenglasrohlings zur Herstellung einer Rezeptfläche des Brillenglases, während der Brillenglasrohling mit der der Rezeptfläche gegenüberliegenden Fläche mit der ersten Gießform verbunden bleibt.

Da die erste Gießform bereits eine Halteeinrichtung in Form des Blockstücks umfasst, kann der Brillenglasrohling nach dem Gießen und gegebenenfalls Härten zusammen mit zumindest der ersten Gießform in eine Rezeptschleifanlage eingebaut werden, wobei die Montage, also die Fixierung des Brillenglasrohlings in der Schleifanlage über das Blockstück der ersten Gießform erfolgt. Es ist somit kein zusätzlicher Blockvorgang mehr erforderlich. Daraus ergeben sich neben dem Wegfall eines ansonsten aufwendigen Arbeitsschritts, dem Blocken, auch noch weitere Vorteile. Es sind insbesondere keine Schwermetalllegierungen (Alloy) mehr nötig, die beim herkömmlichen Blocken von Brillengläsern für die Rezeptglasschleiferei Anwendung fanden. Außerdem wird erfindungsgemäß eine wesentliche Verbesserung in der Präzision der Positionierung des Brillenglasrohlings für das Rezeptglasschleifverfahren erreicht, da der Brillenglasrohling fest mit der ersten Gießform und damit ortsfest zum Blockstück als Halteeinrichtung positioniert bleibt, während beim herkömmlichen Blockverfahren ein Brillenglas bzw. Brillenglasrohling erst präzise relativ zum Block positioniert werden muss. Dieser erfindungsgemäße Vorteil wird um so entscheidender, je mehr Arbeitsschritte bei der Bearbeitung des Brillenglasrohlings bzw. Brillenglases durchgeführt werden, ohne den Rohling bzw. das Brillenglas von der ersten Gießform zu trennen. Dies wird nachfolgend im Zusammenhang mit bevorzugten Ausführungsformen der Erfindung noch eingehend dargestellt. Außerdem bleibt das zu fertigende Brillenglas auf seiner Vorderfläche durch die erste Gießform geschützt, wodurch die Gefahr eines Zerkratzens während der Fertigung wesentlich verringert wird. Außerdem wird durch eine vollflächige Unterstützung des Brillenglases während der Fertigung dessen Stabilität verbessert, weshalb selbst sehr dünne Brillengläser, welche bei herkömmlichen Verfahren aufgrund ihrer elastischen Eigenschaften und der sich daraus ergebenen Verbiegung bei der Bearbeitung (z.B. beim Rezeptschleifen) zu optischen Fehlern führen, in einem erfindungsgemäßen Verfahren vorzugsweise mit einer verbesserten optischen Qualität hergestellt werden können. Diese Verbesserung kann sich vor allem bei extrem ovalen Brillengläsern deutlich auswirken.

Vorzugsweise wird als Rezeptfläche die Rückfläche als frei formbare Fläche des Brillenglases in einem Rezeptglasschleifverfahren hergestellt. Die der Rezeptfläche abgewandte Vorderfläche des Brillenglas wird damit durch die erste Gießformfläche der ersten Gießform gebildet und bleibt während des Rezeptschleifens der Rückfläche mit der ersten Gießform an der Vorderseite verbunden. In dieser bevorzugten Ausführungsform bildet die erste Gießform somit die vordere Gießform, während die zweite Gießform als hintere Gießform fungiert.

In einer besonders bevorzugten Ausführungsform umfasst das Rezeptschleifen ein Abtragen, insbesondere Abschleifen der zweiten Gießform vom Brillenglasrohling. Der Brillenglasrohling wird somit vorzugsweise zusammen mit den beiden Gießformen in die Rezeptglasschleifanlage eingebaut. Während das Blockstück der ersten Gießform als Halteeinrichtung zum Fixieren des Brillenglasrohlings dient, wird die von der ersten Gießform abgewandte Fläche des Brillenglasrohlings zusammen mit der noch daran angeordneten zweiten Gießform abgeschliffen, um die gewünschte Rezeptfläche des Brillenglases zu erhalten. Es ist also vorzugsweise nicht erforderlich den Brillenglasrohling von den Gießformen zu trennen. Damit lässt sich gegenüber herkömmlichen Gießverfahren ein aufwendiger Arbeitsschritt einsparen. Außerdem wird die beim herkömmlichen Gießverfahren bestehende Gefahr der Beschädigung des Brillenglasrohlings beim Trennen von den Gießformen vermindert oder vermieden. Insbesondere ist eine Beschädigung des Brillenglasrohlings beim Abschleifen der zweiten Gießform gegenüber herkömmlichen Gießverfahren, bei denen die Gießformen im Ganzen abgetrennt werden, vermieden oder zumindest wesentlich reduziert.

Vorzugsweise umfasst das Zusammenfügen der ersten und zweiten Gießform ein Anbringen einer Verschlusshülse um den Rand der beiden Gießformen, insbesondere als ein um den Rand der Gießformen gewickeltes Band, derart dass die beiden Gießformen dadurch relativ zueinander gehalten werden.

Die Verschlusshülse bzw. das Band schließt dabei insbesondere mit dem peripheren Rand der Gießformen formschlüssig, also dicht, ab, um den Gießhohlraum zumindest teilweise peripher zu verschließen und ein Ausfließen eines aushärtbaren Fluids, welches nach dem Aushärten den Brillenglasrohling bildet, zu verhindern. Ein formschlüssiges und damit dichtes Verschließen am peripheren Rand der Gießformen wird besonders durch einen glatten bzw. stetigen und insbesondere in Umfangsrichtung konvexen Verlauf der Randflächen der Gießformen erreicht. Zum Füllen bzw. Ausgießen des Gießhohlraums wird insbesondere in der Verschlusshülse und/oder in zumindest einer der Gießformen eine Einfüllöffnung vorgesehen.

Vorzugsweise umfasst das Bereitstellen der ersten und/oder zweiten Gießform ein Formranden der ersten bzw. zweiten Gießform, d.h. die erste bzw. zweite Gießform wird vorzugsweise zunächst als Gießformrohling hergestellt, dessen peripherer Rand bis zur gewünschten Größe oder Randform der entsprechenden Gießform abgetragen wird. Dabei werden die erste und zweite Gießform vorzugsweise in dieselbe bzw. entsprechende Randform gebracht, wodurch die beiden Gießformen besonders gut zusammengefügt werden können.

Insbesondere wenn das Zusammenfügen der Gießformen durch Umwickeln des peripheren Randes der beiden Gießformen mit einem Band erfolgt, ist es besonders vorteilhaft einander entsprechende bzw. aufeinander abgestimmte Verläufe der peripheren Ränder der ersten und zweiten Gießformen vorzusehen und diese Ränder insbesondere als saubere oder polierte Flächen auszubilden.

Durch das Formranden der ersten und/oder zweiten Gießform wird der Gießhohlraum vom peripheren Rand her gegenüber rohrunden Gießformen verkleinert, weshalb die Menge an aushärtbarem Material für den Brillenglasrohling reduziert werden kann. Da dieses Material nach dessen mechanischer Abtragung bei der Fertigung des Brillenglases aus dem Brillenglasrohling in der Regel nicht mehr recycelt, also nicht mehr für die Herstellung eines weiteren Brillenglasrohlings wieder verwertet werden kann und aufgrund der geforderten optischen Eigenschaften und Reinheit vergleichsweise teuer ist, bedeutet die Herstellung kleinerer Brillenglasrohlinge eine wesentliche Ersparnis. Vorzugsweise werden die erste und zweite Gießform hinsichtlich des peripheren Randes im Wesentlichen an die Randform des gewünschten Brillenglases angepasst. Im "Wesentlichen" bedeutet dabei insbesondere, dass die Randform der Gießformen nicht vollständig identisch mit der Randform des gewünschten Brillenglases sondern mit einem gewissen Übermaß bereitgestellt wird, in welchem insbesondere ein eventuelles Schrumpfen des Brillenglasrohlings beim Aushärten sowie die weitere erforderliche Randbearbeitung, z.B. Rillen und/oder Fasen, für das Randen bzw. Einfassen des Brillenglases berücksichtigt sind.

Vorzugsweise umfasst das Verfahren ein Erfassen von Randformdaten des für den Brillenträger herzustellenden Brillenglases. Diese Randformdaten können insbesondere Daten über die Fassungsform sein. Bei einer randlosen Brille beschreiben die Randformdaten die gewünschte Form des jeweiligen Brillenglasrandes, also die Größe und den peripheren Verlauf des Brillenglases, zumindest teilweise. Insbesondere werden vorzugsweise zumindest eine laterale Ausdehnung bzw. eine Breite und eine vertikale Ausdehnung bzw. eine Höhe des Brillenglases als Teil der Randformdaten erfasst. Für eine Brille mit Fassung werden die Randformdaten vorzugsweise zumindest teilweise durch die Form des Fassung, insbesondere der Fassungsscheibe vorgegeben. Dabei umfasst das Bereitstellen der ersten Gießform und/oder der zweiten Gießform vorzugsweise ein Herstellen der ersten bzw. zweiten Gießform aus einem ersten Gießformrohling bzw. einem zweiten Gießformrohling durch Abtragen zumindest eines Teils des peripheren Randes des entsprechenden Gießformrohlings in Abhängigkeit von den erfassten Randformdaten.

Vorzugsweise umfasst das Bereitstellen der zweiten Gießform in analoger Weise ein Herstellen der zweiten Gießform aus einem zweiten Gießformrohling durch Abtragen zumindest eines Teils des peripheren Randes des zweiten Gießformrohlings in Abhängigkeit von den erfassten Randformdaten. Vorzugsweise wird also vor dem Zusammenfügen, z.B. durch Tapen, der Gießformen ein Teil der ersten und zweiten Gießform vom peripheren Rand der jeweiligen Gießformfläche her abgetragen. Insbesondere werden die erste und zweite Gießform gemäß dieser bevorzugten Ausführungsform zunächst aus "rohrunden" Gießformrohlingen hergestellt, d.h. die Gießformrohlinge besitzen vorzugsweise einen kreisförmigen Querschnitt. Der periphere Umfang bildet also im Wesentlichen einen Kreis. Bevor die beiden Gießformen zum Ausgießen zusammengefügt werden, werden sie nun vorzugsweise abhängig von der gewünschten individuellen Form eines Brillenglases eines Benutzers, also insbesondere abhängig von der gewünschten Brillenfassung, geformt. Insbesondere werden sie an die Form des endgültigen Brillenglases angenähert, so dass die Nachbearbeitung wesentlich vereinfacht wird. Damit wird beispielsweise aufgrund des geringeren späteren Abtrags am Brillenglas der Zeitaufwand der Nachbearbeitung verringert. Auch der Materialverlust an Brillenglasmaterial wird wesentlich reduziert, da einerseits der laterale Überstand des resultierenden Brillenglases wesentlich verringert wird und andererseits der Brillenglasrohling dünner gefertigt werden kann, d.h. sowohl radial als auch in der Dicke ergibt sich eine Materialeinsparung.

Vorzugsweise umfasst das Bereitstellen der ersten Gießform ein Spritzgießen derart, dass dabei eine eine erste Gießformfläche bildende erste Gießformschale der ersten Gießform und das von der ersten Gießformfläche abgewandte Blockstück einstückig ausgebildet werden.

Besonders bevorzugt wird die erste Gießform zunächst als erster Gießformrohling durch Spritzgießen hergestellt. Dabei bildet die Gießformschale die erste Gießformfläche. Der Gießformrohling wird vorzugsweise mit einem kreisrunden peripheren Rand der Gießformschale ausgebildet. Stützrippen an der Gießformschale dienen als Versteifungsrippen. Dadurch wird bei vergleichsweise geringer Materialdicke eine hohe Steifigkeit der ersten Gießformschale sowie der gesamten ersten Gießform erreicht. Damit wird verhindert, dass die durch die erste Gießformfläche vorgegebenen Krümmung während des Aushärtens des Brillenglasrohlings durch dessen eventuelles Schrumpfen verändert wird. Somit wird für die der Rezeptfläche abgewandte erste Fläche des Brillenglases eine höhere Präzision erreicht.

Vorzugsweise umfasst das Bereitstellen der zweiten Gießform ein Tiefziehen. Dabei wird die zweite Gießform vorzugsweise aus einem Thermoplast, insbesondere aus PMMA und/oder PET und/oder Polycarbonat gefertigt.

Vorzugsweise umfasst das Verfahren ein Formranden des Brillenglases, während das Brillenglas mit der der Rezeptfläche gegenüberliegenden Fläche zur ersten Gießform verbunden bleibt. Insbesondere wird beim Formranden der periphere Rand des Brillenglases auf dessen gewünschten Verlauf gebraucht und, zumindest soweit das Brillenglas in eine Fassung mit Rand eingepasst werden soll, ein entsprechendes Randprofil ausgebildet. Dabei umfasst das Formranden zur Ausbildung des Randprofils insbesondere ein Rillen und/oder ein Fasen des peripheren Randes des Brillenglases. Vor allem wenn das Bereitstellen der ersten und zweiten Gießform bereits ein Abtragen des peripheren Randes der jeweiligen Gießform ausgehend von entsprechenden Gießformrohlingen umfasst, wenn also die Gießformen bereits in einer Form bereitgestellt werden, die bezüglich des peripheren Randes an die gewünschte Form der Brillenglases angenähert sind, muss beim Formranden des Brillenglases nur noch wenig Material vom Brillenglas abgetragen werden. Dadurch wird auch dieser Arbeitsschritt insbesondere in Bezug auf den Materialverbrauch, den Zeitaufwand und den Werkzeugverschleiß im Vergleich zu herkömmlichen Verfahren wesentlich verbessert.

Vorzugsweise umfasst das Verfahren ein Beschichten des Brillenglases auf der Rezeptfläche, während das Brillenglas mit der der Rezeptfläche gegenüberliegenden Fläche zur ersten Gießform verbunden bleibt. In einer bevorzugten Ausführungsform umfasst das Beschichten ein Färben des Brillenglases insbesondere durch Thermosublimation. In einer weiteren bevorzugten Ausführungsform umfasst das Beschichten alternativ oder zusätzlich das Abscheiden einer Hartbeschichtung und/oder einer Antireflexbeschichtung vorzugsweise mittels Spin-Coating.

Vorzugsweise umfasst das Verfahren unmittelbar oder mittelbar vor dem Zusammenfügen der ersten und zweiten Gießform ein Beschichten einer ersten Gießformfläche der ersten Gießform mit einer Beschichtung, die nach einem Ablösen des Brillenglases von der ersten Gießform zumindest teilweise auf dem Brillenglas verbleibt, um dort eine Farbbeschichtung und/oder eine Hartbeschichtung und/oder eine Antireflexbeschichtung zu bilden. Dieser Vorgang wird auch als In-Mold-Coating bezeichnet. Dadurch ist es vorzugsweise nicht erforderlich die von der ersten Gießformfläche vorgegebenen bzw. gebildete Fläche des Brillenglases nach dem Trennen des Brillenglases von der ersten Gießform noch zu bearbeiten, insbesondere zu beschichten. Somit können vorzugsweise im Wesentlichen (abgesehen von z.B. einer abschließenden Reinigung) alle Bearbeitungsschritte am Brillenglas durchgeführt werden während das Brillenglas durchgehend und damit genau und permanent positioniert mit der ersten Gießform verbunden bleibt, ohne auf eine oder mehrere Beschichtungen der der ersten Gießform zugewandten Brillenglasfläche verzichten zu müssen.

Vorzugsweise wird die erste Gießform mit einer konkaven, insbesondere sphärischen ersten Gießformfläche bereitgestellt. Insbesondere bildet die erste Gießform vorzugsweise eine vordere Gießformfläche zum Gießen einer konvexen Vorderfläche eines Brillenglases. Besonders bevorzugt wird zunächst eine Vielzahl von ersten Gießformen oder ersten Gießformrohlingen mit verschiedenen ersten Gießformen hergestellt und vorrätig gehalten. Insbesondere wird eine Vielzahl von ersten Gießformen oder ersten Gießformrohligen mit verschiedenen Krümmungsradien sphärischer erster Gießformflächen hergestellt. Vorzugsweise werden erste Gießformen oder erste Gießformrohlinge mit einer Vielzahl von zumindest 5, noch mehr bevorzugt zumindest 8, weiter bevorzugt zumindest 10 verschiedenen Krümmungsradien der Gießformfläche in einer Serie von Gießformen bzw. Gießformrohlingen bereitgestellt. Dabei werden vorzugsweise erste Gießformen oder erste Gießformrohlinge mit einer Vielzahl von nicht mehr als 30, noch mehr bevorzugt nicht mehr als 25, weiter bevorzugt nicht mehr als 20 und besonders bevorzugt nicht mehr als 15 verschiedenen Krümmungsradien der Gießformfläche in einer Serie von Gießformen bzw. Gießformrohlingen bereitgestellt. Dabei decken die bereitgestellten Krümmungsradien insbesondere einen Bereich von Basiskurven von etwa 1 dpt des Flächenbrechwerts und mehr, vorzugsweise von etwa 2 dpt und mehr, insbesondere einen Bereich von Basiskurven von etwa 30 dpt des Flächenbrechwerts und weniger vorzugsweise von etwa 20 dpt und weniger ab. Die Abstufung zwischen den verschiedenen Krümmungsradien ist dabei vorzugsweise nicht kleiner als 0,5 dpt des Flächenbrechwerts und/oder vorzugsweise nicht größer als 4 dpt des Flächenbrechwerts, besonders bevorzugt nicht größer als 2 dpt des Flächenbrechwerts.

In einem Aspekt umfasst die vorliegende Offenbarung eine Gießform, welche auch als Gießformrohling bereit gestellt werden kann, zum Gießen eines Brillenglasrohlings, umfassend eine Gießformfläche zur Vorgabe der Form einer Fläche des Brillenglasrohlings und ein Blockstück zum Fixieren der Gießform in einer Rezeptschleifanlage zum Rezeptschleifen des an der Gießformfläche angeordneten Brillenglasrohlings. Vorzugsweise umfasst die Gießform einen Thermoplast, insbesondere PMMA und/oder PET und/oder PC. In einem weiteren Aspekt umfasst die vorliegende Offenbarung eine Spritzgussform zum Spritzgießen einer solchen Gießform, insbesondere in Form eines Gießformrohlings.

In einem weiteren Aspekt umfasst die vorliegende Offenbarung einen Satz von Gießformrohlingen, umfassend eine erste Serie von Gießformrohlingen, welche eine Vielzahl von ersten Gießformrohlingen umfasst, von denen jeder Gießformrohling eine erste Gießformfläche und ein von der ersten Gießformfläche abgewandtes Blockstück umfasst, wobei die Gießformrohlinge der ersten Serie übereinstimmende Blockstücke und zumindest teilweise, also zumindest zwischen manchen der Gießformrohlinge, unterschiedliche Krümmungen (Basiskurven) der ersten Gießformfläche aufweisen. Insbesondere weisen die ersten Gießformrohlinge der zumindest einen ersten Serie von Gießformrohlingen einen übereinstimmenden peripheren Umfang auf, wobei deren peripherer Umfang vorzugsweise kreisförmig ist. In einer weiteren bevorzugten Ausführungsform umfasst der Satz von Gießformrohlingen eine weitere erste Serie von Gießformrohlingen, welche eine Vielzahl von weiteren ersten Gießformrohlingen mit jeweils einer ersten Gießformfläche und einem von der ersten Gießformfläche abgewandten Blockstück umfasst, wobei die Gießformrohlinge der weiteren ersten Serie zumindest teilweise unterschiedliche Krümmungen der ersten Gießformfläche aber einen untereinander übereinstimmenden peripheren Umfang aufweisen, der vom peripheren Umfang der anderen, zuerst genannten, ersten Serie abweicht.

Vorzugsweise umfasst der Satz von Gießformrohlingen eine zweite Serie von Gießformrohlingen, welche eine Vielzahl von zweiten Gießformrohlingen mit jeweils einer zweiten Gießformfläche umfasst, wobei die Gießformrohlinge der zweiten Serie zumindest teilweise unterschiedliche Krümmungen der zweiten Gießformfläche aufweisen. Insbesondere weisen die zweiten Gießformrohlinge der zumindest einen zweiten Serie von Gießformrohlingen einen gleichen peripheren Umfang auf, wobei deren peripherer Umfang vorzugsweise kreisförmig ist. In einer weiteren bevorzugten Ausführungsform umfasst der Satz von Gießformrohlingen eine weitere zweite Serie von Gießformrohlingen, welche eine Vielzahl von weiteren zweiten Gießformrohlingen mit jeweils einer zweiten Gießformfläche umfasst, wobei die Gießformrohlinge der weiteren zweiten Serie zumindest teilweise unterschiedliche Krümmungen der zweiten Gießformfläche aber einen untereinander übereinstimmenden peripheren Umfang aufweisen, der vom peripheren Umfang der anderen, zuerst genannten, zweiten Serie abweicht.

Vorzugsweise weisen die ersten und/oder zweiten Gießformrohlinge einen kreisförmigen peripheren Rand auf. In einer weiteren bevorzugten Ausführungsform weisen die ersten Gießformen eine höhere Formstabilität insbesondere derart auf als die zweiten Gießformen, dass beim Schrumpfen eines aushärtbaren Materials für das Brillenglas in einem von zwei zusammengefügten Gießformen, nämlich einer ersten und einer zweiten Gießform, gebildeten Gießhohlraum während des Aushärtens die maximale Änderung der Krümmung der ersten Gießformfläche durch Verformung der ersten Gießform geringer ist als die maximale Änderung der Krümmung der zweiten Gießformfläche durch Verformung der zweiten Gießform. Dadurch wird erreicht, dass bei einer Volumenänderung, insbesondere einem Schrumpfen, des aushärtbaren Materials für das Brillenglas die zweite Gießform einen wesentlichen Anteil der Volumenänderung durch entsprechende Verformung kompensiert und die erste Gießformfläche somit weniger stark beeinflusst bzw. verändert wird. Damit verbleibt die erste Gießformfläche vorzugsweise auch für verschiedene Brillenglasgrößen und -dicken im Wesentlichen in der von der ersten Gießform vorgegebenen Form erhalten. Somit ist eine verbesserte Genauigkeit bei der Herstellung einer ersten Brillenglasfläche, insbesondere einer Vorderfläche des Brillenglases, welche insbesondere nicht mehr durch einen Schleifvorgang verändert wird, möglich. Die Formveränderung der zweiten Gießformfläche bei einer Volumenänderung des aushärtbaren Materials für das Brillenglas spielt insbesondere dann keine entscheidende Rolle, wenn die zweite Brillenglasfläche ohnehin ausgehend von der gegossenen Form insbesondere nach einem der Herstellungsverfahren durch Rezeptschleifen in die gewünschte Form gebracht wird.

Vorzugsweise wird jede erste Gießformfläche von einer ersten Gießformschale des jeweiligen ersten Gießformrohlings und jede zweite Gießformfläche von einer zweiten Gießformschale des jeweiligen zweiten Gießformrohlings derart gebildet, dass die ersten Gießformschalen der ersten Serie von Gießformen eine höhere Materialdicke aufweisen als die zweiten Gießformschalen der zweiten Serie von Gießformen.

Vorzugsweise weisen die ersten Gießformrohlinge Versteifungsrippen auf. Besonders bevorzugt weisen nur die ersten, nicht aber die zweiten Gießformen Versteifungsrippen auf. Die Versteifungsrippen sind insbesondere auf der der ersten Gießformfläche abgewandten Seite der Gießformschale angeordnet und unterstützen die Formstabiltät der ersten Gießformrohlinge insbesondere zur Verhinderung oder Verringerung einer Verformung der ersten Gießformfläche während des Aushärtens des Materials für das Brillenglas bzw. den Brillenglasrohling.

Vorzugsweise umfassen die ersten und/oder zweiten Gießformen einen Thermoplast, insbesondere PMMA und/oder PET und/oder PC.

In einem weiteren Aspekt umfasst die vorliegende Offenbarung einen Satz von Spritzgusswerkzeugen, umfassend eine Serie von Spritzgussformen zum Herstellen, also Spritzgießen, einer ersten Serie von Gießformrohlingen, insbesondere gemäß eines Satzes von Gießformrohlingen insbesondere in einer der beschriebenen bevorzugten Ausführungsformen, welche eine Vielzahl von ersten Gießformrohlingen umfasst, von denen jeder Gießformrohling eine erste Gießformfläche und ein von der ersten Gießformfläche abgewandtes Blockstück umfasst, wobei die Serie von Spritzgussformen eine Vielzahl von Spritzgussformen umfasst, von denen jede Spritzgussform zum Spritzgießen eines Gießformrohlings der ersten Serie von Gießformrohlingen derart ausgelegt ist, dass die durch verschiedene Spritzgussformen hergestellten Gießformrohlinge übereinstimmende Blockstücke und zumindest teilweise, also zumindest zwischen manchen der durch verschiedene Spritzgussformen hergestellten Gießformrohlinge, unterschiedliche Krümmungen (Basiskurven) der ersten Gießformfläche aufweisen.

Die Serie von Spritzgussformen umfasst damit eine Vielzahl von Spritzgussformen, von denen jede Spritzgussform ausgelegt ist, damit durch Spritzgießen einen ersten Gießformrohling herzustellen, welcher eine erste Gießformfläche und ein von der ersten Gießformfläche abgewandtes Blockstück umfasst. Jede Spritzgussform bildet also einen Hohlraum welcher im Wesentlichen das Negativ zu dem herzustellenden Gießformrohling darstellt. Für die Herstellung eines Brillenglases für einen Benutzer wird somit vorzugsweise entweder ein insbesondere Satz von Gießformrohlingen oder ein entsprechender Satz von Spritzgusswerkzeugen vorrätig gehalten. Je nach herzustellendem Brillenglas wird dann ein geeigneter erster Gießformrohling aus dem Satz von Gießformrohlingen ausgewählt oder mittels einer aus dem Satz von Spritzgusswerkzeugen ausgewählten Spritzgussform hergestellt. Entsprechend wird vorzugsweise abhängig von dem herzustellenden Brillenglas ein zweiter Gießformrohling aus einer zweiten Serie von Gießformrohlingen ausgewählt oder direkt in Abhängigkeit von dem herzustellenden Brillenglas vorzugsweise durch Tiefziehen hergestellt. Alternativ könnte der zweite Gießformrohling auch durch Spritzgießen, Blasen und/oder Prägen gefertigt werden.

Vorzugsweise umfasst die Serie von Spritzgussformen zum Herstellen der ersten Serie von Gießformrohlingen zumindest 5, vorzugsweise zumindest 10 Spritzgussformen zum Herstellen der ersten Serie von Gießformrohlingen mit zumindest 5, vorzugsweise zumindest 10 verschiedenen Krümmungen (Basiskurven) der ersten Gießformfläche.

In einer bevorzugten Ausführungsform umfasst ein erfindungsgemäßes Verfahren ein Erfassen von Benutzerdaten, welche insbesondere Rezeptwerte und/oder Gebrauchswerte umfassen, für ein herzustellendes Brillenglas eines Benutzers bzw. Brillenträgers, wobei das Bereitstellen einer ersten Gießform ein Auswählen eines ersten Gießformrohlings aus einem Satz von Gießformrohlingen gemäß der vorliegenden Erfindung, insbesondere in einer ihrer beschriebenen bevorzugten Ausführungsformen, unter Berücksichtigung der erfassten Benutzerdaten umfasst.

In einer weiteren bevorzugten Ausführungsform umfasst ein erfindungsgemäßes Verfahren ein Erfassen von Benutzerdaten, welche insbesondere Rezeptwerte und/oder Gebrauchswerte umfassen, für ein herzustellendes Brillenglas eines Benutzers bzw. Brillenträgers, wobei das Bereitstellen einer ersten Gießform umfasst:
- Auswählen einer Spritzgussform aus einem Satz von Spritzgusswerkzeugen, insbesondere in einer ihrer beschriebenen bevorzugten Ausführungsformen, unter Berücksichtigung der erfassten Benutzerdaten; und
- Herstellen der ersten Gießform, wobei das Herstellen der ersten Gießform ein Spritzgießen mittels der ausgewählten Spritzgussform umfasst.

Je nach gewünschter Form des zu gießenden Brillenglases bzw. Brillenglasrohlings wird dabei entweder der durch das Spritzgießen mittels der ausgewählten Spritzgussform hergestellte erste Gießformrohling unmittelbar als erste Gießform verwendet, oder der erste Gießformrohling wird zunächst noch bearbeitet, insbesondere durch teilweises Abtragen des peripheren Randes, um damit die erste Gießform zu erhalten.

Die Erfindung wird nachfolgend anhand bevorzugter Ausführungsformen mit Bezug auf die beigefügten Zeichnungen beispielhaft beschrieben. Dabei zeigen:
- Fig. 1A:: eine Querschnittsansicht eines ersten Gießformrohlings;
- Fig. 1B:: eine Außenansicht des Gießformrohlings von Fig. 1A;
- Fig. 2A:: eine Querschnittsansicht eines zweiten Gießformrohlings;
- Fig. 2B:: eine Außenansicht des Gießformrohlings von Fig. 2A;
- Fig. 3A: eine Querschnittsansicht einer ersten Gießform;
- Fig. 3B: eine Außenansicht der Gießform von Fig. 3A;
- Fig. 4A:: eine Querschnittsansicht einer zweiten Gießform;
- Fig. 4B:: eine Außenansicht der Gießform von Fig. 4A;
- Fig. 5A-5K: Querschnittansichten einzelner Zwischenstufen in einem Verfahren zur Herstellung eines Brillenglases gemäß einer bevorzugten Ausführungsform der vorliegenden Erfindung;
- Fig. 6A-6B: schematische Gegenüberstellung von Verfahrensschritten bei der Herstellung von Brillenglasrohlingen in einem herkömmlichen Verfahren (Fig. 6A) und in einem Verfahren zur Herstellung eines Brillenglases gemäß einer bevorzugten Ausführungsform der vorliegenden Erfindung (Fig. 6B);
- Fig. 7A-7B: schematische Gegenüberstellung von Verfahrensschritten beim Rezeptschleifen in einem herkömmlichen Verfahren (Fig. 7A) und in einem Verfahren zur Herstellung eines Brillenglases gemäß einer bevorzugten Ausführungsform der vorliegenden Erfindung (Fig. 7B); und
- Fig. 8A-8B: schematische Gegenüberstellung von Verfahrensschritten beim Beschichten von Brillengläsern in einem herkömmlichen Verfahren (Fig. 8A) und in einem Verfahren zur Herstellung eines Brillenglases gemäß einer bevorzugten Ausführungsform der vorliegenden Erfindung (Fig. 8B).

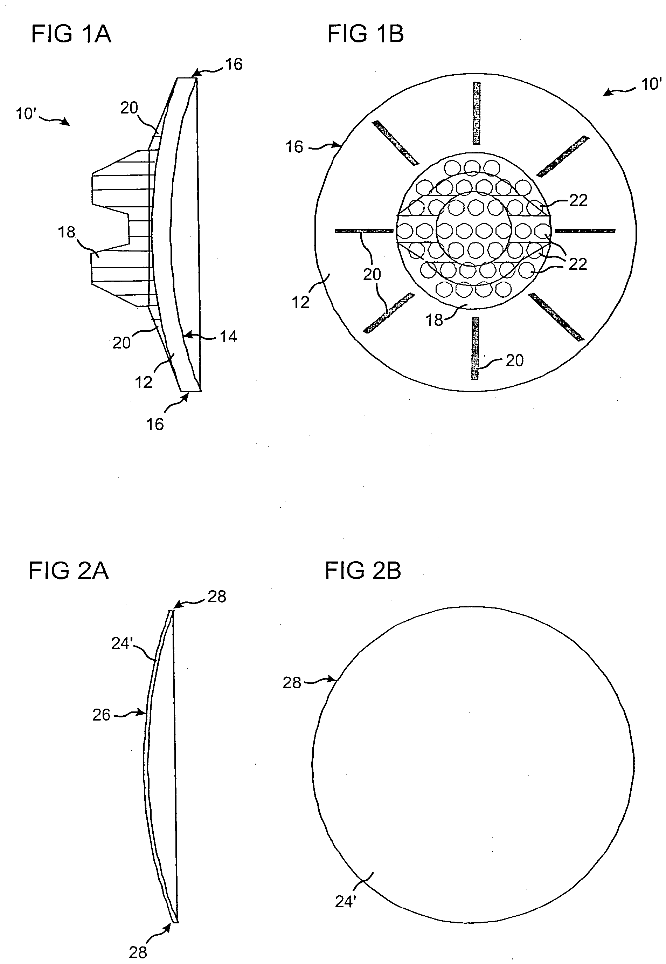

Fig. 1A zeigt eine Querschnittansicht eines ersten Gießformrohlings 10'. Eine gekrümmte Oberfläche einer Gießformschale 12 des Gießformrohlings 10' bildet eine erste Gießformfläche 14. In der dargestellten Ausführungsform ist die erste Gießformfläche 14 eine konkave Fläche. Besonders bevorzugt ist die erste Gießformfläche 14 eine sphärische Fläche oder eine rotationssymmetrische asphärische Fläche. Sie wird insbesondere mit einer ausreichend hohen Güte bzw. geringen Rauhigkeit bereitgestellt, um damit eine Brillenglasfläche definieren zu können, die eine ausreichende optische Qualität besitzt ohne nachbearbeitet werden zu müssen. Vorzugsweise weist die Gießformschale 12 einen peripheren Rand 16 auf, der vorzugsweise kreisförmig ausgebildet ist. Dies ist auch in Fig. 1B nochmals zu erkennen. Außerdem umfasst der Gießformrohling 10' ein Blockstück 18. Das Blockstück 18 ist vorzugsweise einstückig mit der Gießformschale 12 ausgebildet und bildet eine Halteeinrichtung zum Montieren oder Fixieren des Gießformrohlings bzw. einer daraus gefertigten Gießform in diversen Werkzeugmaschinen für die Bearbeitung des Gießformrohlings 10' und/oder eines an der ersten Gießformfläche 14 angeordneten Brillenglasrohlings oder Brillenglases, wie nachfolgend noch genauer ausgeführt wird. Zur weiteren Stabilisierung der Gießformschale 12 umfasst der Gießformrohling 10' vorzugsweise Versteifungsrippen. Damit wird mit vergleichsweise geringer Materialdicke der Gießformschale 12 eine hohe Formstabilität erreicht, um eine Formveränderung der vorgegebenen Gießformfläche 14 während des Gießens oder Aushärtens eines Brillenglasrohlings zu reduzieren oder zu verhindern. Außerdem sind beispielsweise zur Materialreduktion im Blockstück 18 eine Vielzahl von Poren 22 vorgesehen, die beispielsweise wabenförmig angeordnet sind.

Vorzugsweise wird ein erster Gießformrohling 10', wie er beispielsweise in Fig. 1A und 1B gezeigt ist, zur Herstellung einer später noch genauer beschriebenen ersten Gießform verwendet, um über dessen erste Gießformfläche 14 den Verlauf, also die Form, der Vorderfläche eines herzustellenden Brillenglases zu definieren. Eine konkave erste Gießformfläche 14 führt damit zu einer konvexen Vorderfläche des Brillenglases.

In einer bevorzugten Ausführungsform eines erfindungsgemäßen Verfahrens zur Herstellung eines Brillenglases für einen Benutzer wird für die Festlegung einer Rückfläche eines Brillenglasrohlings, aus dem das herzustellende Brillenglas gefertigt wird, eine zweite Gießform aus einem zweiten Gießformrohling 24' gefertigt, wie er beispielhaft in Fig. 2A und Fig. 2B dargestellt ist. Dazu weist der zweite Gießformrohling 24' eine zweite Gießformfläche 26 auf, die im Wesentlichen die Rückfläche eines zu gießenden Brillenglasrohlings definiert. "Im Wesentlichen" bedeutet in diesem Fall insbesondere, dass eine durch Verformung der zweiten Gießform während des Gießens oder Aushärtens des Materials für den Brillenglasrohling bewirkte Abweichung der Rückfläche des Brillenglasrohlings von der Form der zweiten Gießformfläche 26 in ihrem ursprünglichen Zustand möglich und erlaubt ist. In der in Fig. 2A und 2B gezeigten bevorzugten Ausführungsform weist der zweiten Gießformrohling 24' kein Blockstück auf. Vielmehr wird der zweite Gießformrohling 24' vorzugsweise im Wesentlichen von einer zweiten Gießformschale 24' gebildet. Vorzugsweise weist die zweite Gießformschale 24' bzw. der zweite Gießformrohling 24' einen peripheren Rand 28 auf, der vorzugsweise kreisförmig ausgebildet ist. Dies ist insbesondere in Fig. 2B gut zu erkennen. Vorzugsweise werden in einem Satz von Gießformrohlingen eine Vielzahl von ersten Gießformrohlingen 10' und eine Vielzahl von zweiten Gießformrohligen 24' bereitgestellt, wobei die zweiten Gießformrohlinge 24' denselben peripheren Randverlauf, also vorzugsweise denselben Durchmesser haben wie die ersten Gießformrohlinge 10'.

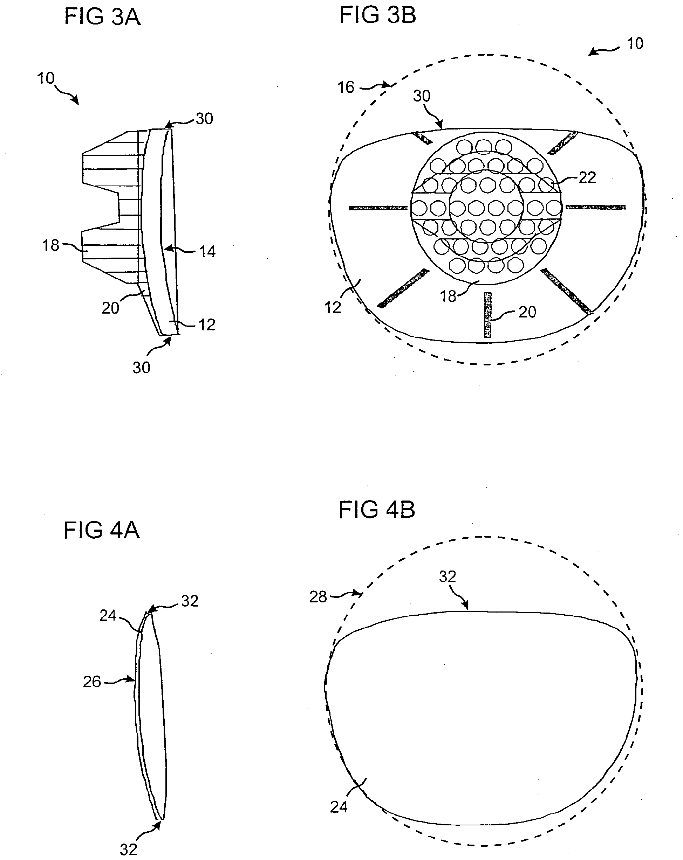

Vorzugsweise werden bei der Herstellung von Brillengläsern nicht Gießformrohlinge, beispielsweise in Form der kreisrunden Gießformrohlinge 10' und 24' aus Fig. 1A bis 2B, verwendet, sondern diese werden zunächst noch bearbeitet, um daraus Gießformen, wie vorzugsweise die in Fig. 3A bis 4B dargestellten Gießformen 19 bzw. 24, herzustellen. Insbesondere wird dazu vorzugsweise ein Teil der Gießformschale 12 bzw. 24 vom jeweiligen peripheren Rand 16, 28 der Gießformrohlinge 10', 24' her abgetragen, um daraus formgerandete Gießformen 10, 24 zu erhalten, welche von der Randform her dem gewünschten Brillenglas für den jeweiligen Brillenträger bereits recht nahe kommen. Somit werden zunächst vorzugsweise die erforderlichen Benutzerdaten bezüglich der gewünschten Randform des herzustellenden Brillenglases erfasst. Bei einer Brille mit Fassung sind diese Daten im Wesentlichen durch die Fassungsform vorgegeben. Durch das teilweise Abtragen der Gießformschalen 12, 24' entsteht in Annäherung an die gewünschte Randform des Brillenglases der periphere Rand 30 der ersten Gießform 10 bzw. der periphere Rand 32 der zweiten Gießform. Die gestrichelten Linien in Fig. 3B und Fig. 4B stellen den ursprünglichen Verlauf des jeweiligen peripheren Randes 16, 28 dar.

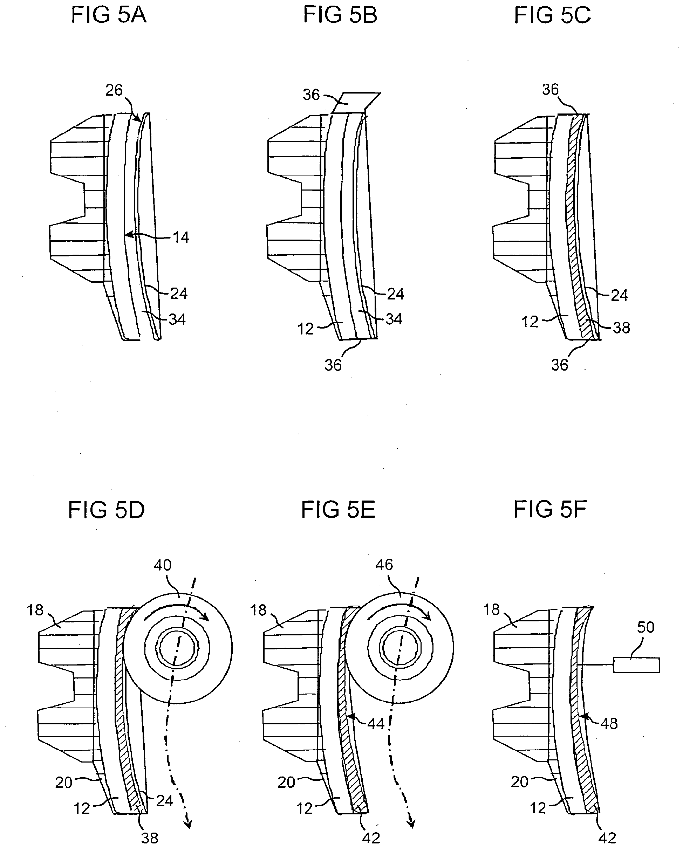

Wie in Fig. 5A dargestellt, werden die beiden in ihrem peripheren Rand 30, 32 aufeinander abgestimmten Gießformen 10, 24 so zueinander angeordnet, dass die beiden Gießformflächen 14, 26 einander zugewandt sind und zwischen den beiden Gießformflächen ein Gießhohlraum 34 gebildet wird. Bei einem erfindungsgemäßen Verfahren reicht es dabei aus, wenn die beiden Gießformen 10, 24 annähernd einen geforderten gegenseitigen Abstand zueinander einnehmen. Der entstehende Gießhohlraum sollte dabei zumindest das Volumen bzw. die Dicke des endgültig herzustellenden Brillenglases erreichen. Ein etwas größerer Abstand kann dabei immer noch toleriert werden, da ohnehin eine individuelle Nachbearbeitung stattfindet. Die Formerkennung, insbesondere die Randformerfassung, der beiden Gießformen 10, 24 vor allem im Hinblick auf eine Überprüfung bzw. Kontrolle bzw. Steuerung dahingehend, dass die beiden Formen bzgl. des Randes zur Deckung gebracht werden können, könnte dabei insbesondere durch eine entsprechende Bildverarbeitung automatisch erreicht werden. Dazu nimmt vorzugsweise zumindest eine Kamera die Anordnung frontal auf eine Gießform blickend auf. Zur Abstandsmessung, also zu Erkennung des gegenseitigen Abstands, kommt vorzugsweise ein taktiles Verfahren, insbesondere unter Verwendung eines Messtasters, zum Einsatz. Speziell bei konkaven Gießformen eignen sich taktile Verfahren beispielsweise im Vergleich zu einer Bildverarbeitung besonders, da von der Seite praktisch kein optisches Profil der entscheidenden Mitte der Funktionsfläche erkannt werden kann.

Entlang des peripheren Randes der Gießformen wird der Gießhohlraum 34 durch eine Verschlusshülse 36 insbesondere in Form eines Bandes 36, das den Zwischenraum zwischen den peripheren Rändern der beiden Gießformen überspannend um die Gießformen gewickelt wird, abgeschossen, wie in Fig. 5B dargestellt. Die beiden Gießformen 10, 24 werden dabei durch die Verschlusshülse 36 zusammengehalten bzw. zueinander in Position gehalten. Anschließend wird der Gießhohlraum mit Material zu Bildung eines Brillenglasrohlings 38 gefüllt. Fig. 5C zeigt einen Querschnitt durch die beiden Gießformen 10, 24 mit dem dazwischen angeordneten Brillenglasrohling 38. Der Brillenglasrohling 38 entsteht dabei durch Aushärten, insbesondere Polimerisieren, des aushärtbaren Materials, welches beim Einfüllen zunächst fließfähig ist. Die Vorderfläche des Brillenglasrohlings 38, welche bereits als Vorderfläche des Brillenglases dienen soll, wird dabei durch die erste Gießformfläche der ersten Gießform 10 vorbestimmt, während die Rückfläche des Brillenglasrohlings 38, welche einem weiteren in Fig. 5D veranschaulichten Rezeptschleifverfahren unterzogen wird, durch die zweite Gießformfläche der zweiten Gießform 24 vorgegeben wird. Eine eventuelle Volumenänderung des aushärtbaren Materials beim Aushärten wird vorzugsweise hauptsächlich durch eine Verformung der zweiten Gießform 24 ausgeglichen. Dazu weist die zweite Gießform vorzugsweise eine geringere Formstabilität auf als die erste Gießform. Dadurch wird verhindert, dass sich die Oberflächen des Brillenglasrohlings 38 beim Aushärten von den Gießformflächen lösen oder dass die erste Gießformfläche sich wesentlich verformt, beides könnte eine Verschlechterung der Qualität der Vorderfläche des Brillenglasrohlings und damit des Brillenglases zur Folge haben und gegebenenfalls einen Ausschuss generieren oder eine Nachbearbeitung erforderlich machen. Dies wird aber in der bevorzugten Ausführungsform vermieden oder zumindest verringert.

Wie in Fig. 5D gezeigt, wird die Rückfläche als frei formbare vorzugsweise als Rezeptfläche des Brillenglases in einem Rezeptglasschleifverfahren hergestellt. Dabei bleibt der Brillenglasrohling 38 mit der ersten Gießform verbunden und wird über das Blockstück 18 der ersten Gießform in der Schleifanlage fixiert und/oder manipuliert, während ein Schleifwerkzeug 40 die Rückfläche des aus dem Brillenglasrohling herzustellenden Brillenglases 42 (Fig. 5E) erzeugt. Vorzugsweise wird bei diesem Schleifvorgang zunächst auch die zweite Gießform 24 abgeschliffen. Wie in Fig. 5E gezeigt, wird die Rezeptfläche 44 des Brillenglases 42 vorzugsweise mittels eines Polierwerkzeugs 46 poliert, während das Brillenglas 42 mit der ersten Gießform verbunden bleibt und über das Blockstück 18 der ersten Gießform in der Polieranlage fixiert und/oder manipuliert wird. Vorzugsweise wird das Brillenglas 42 anschließend mit einem Gravurwerkzeug, wie zum Beispiel einem Laser 50, graviert. Vorzugsweise bleibt das Brillenglas 42 auch bei diesem Verarbeitungsschritt mit der ersten Gießform verbunden und wird über das Blockstück 18 der ersten Gießform während des Gravierens fixiert und/oder manipuliert, wie in Fig. 5F dargestellt.

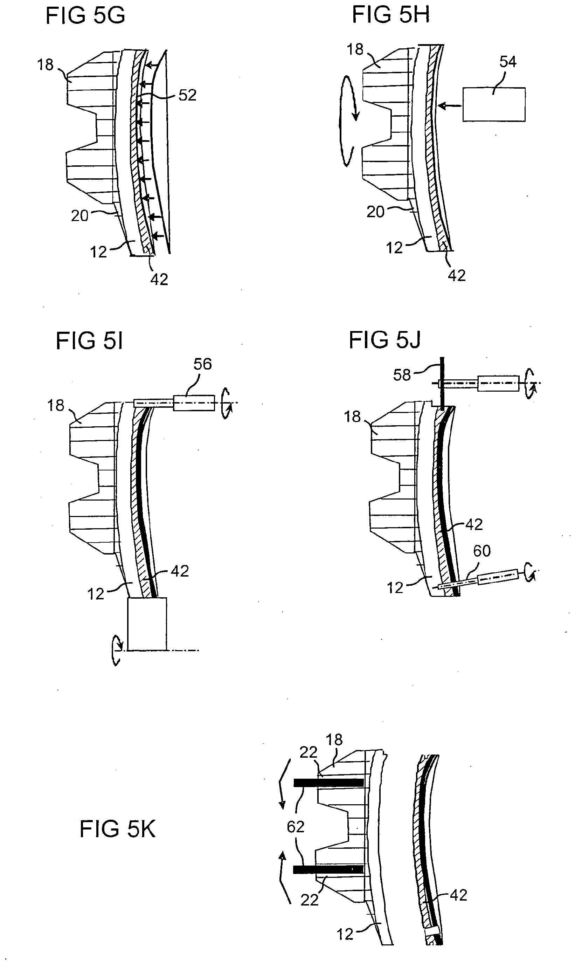

In einer weiteren bevorzugten Ausführungsform wird, wie in Fig. 5G gezeigt, auf der Rezeptfläche des Brillenglases 42 eine Beschichtung 52, insbesondere als Farbschicht, beispielsweise durch Thermosublimation abgeschieden, während das Brillenglas 42 vorzugsweise mit der ersten Gießform verbunden bleibt und wird über das Blockstück 18 der ersten Gießform fixiert und/oder manipuliert wird. Fig. 5H zeigt einen weiteren bevorzugten Schritt des Abscheidens einer weiteren Beschichtung, insbesondere einer Hartbeschichtung und/oder Antireflexbeschichtung vorzugsweise durch Spin-Coating, d.h. die Beschichtung wird als Flüssigkeit aus einer Quelle 54 (Spincoater) auf die Rezeptfläche aufgetragen, während das Brillenglas 42 rotiert wird. Dazu bleibt das Brillenglas 42 vorzugsweise mit der ersten Gießform verbunden und wird über das Blockstück 18 der ersten Gießform im Spincoater fixiert und/oder manipuliert, insbesondere rotiert.

Fig. 5I und Fig. 5J zeigen weitere bevorzugte Verfahrensschritt der Erfindung, wobei in Fig. 5I das Brillenglas 42 mittels eines Randschleifwerkzeugs 56 gerandet, also auf den genauen Randverlauf gebracht wird, während in Fig. 5J der Rand mittels eines Rillwerkzeugs 58 gerillt und/oder das Brillenglas 42 insbesondere nahe des Randes mittels eines Bohrers 60 gebohrt wird, um eine Einfassung des Brillenglases 42 in einer Brille zu ermöglichen. Vorzugsweise verbleibt das Brillenglas 42 auch während dieser Arbeitsschritte mit der ersten Gießform verbunden und wird über das Blockstück 18 der ersten Gießform im Spincoater fixiert und/oder manipuliert. Dadurch wird eine besonders gute und reproduzierbare Positioniergenauigkeit für das Brillenglas während er Arbeitsschritte erreicht. Außerdem ist kein zusätzliches Blocken erforderlich. Schließlich wird, wie in Fig. 5K dargestellt, das Brillenglas 42 insbesondere mittels eines Abblockwerkzeugs 62 von der ersten Gießform gelöst. Beispielsweise umfasst das Abblockwerkzeug 62 dazu zumindest zwei Abblockstäbe, welche in zumindest jeweils eine der Poren 22 in der ersten Gießform eingreifen können, um die Gießform zu verwinden bzw. zu verbiegen bis sie sich vom Brillenglas 42 löst. Auf diese Weise kann das Brillenglas vorzugsweise vollständig hergestellt werden, ohne einen zusätzlichen Blockvorgang zu erfordern. Statt dessen dient vorzugsweise das Blockstück 18 der ersten Gießform während des gesamten Herstellungsverfahrens als Block zum Fixieren und/oder Manipulieren des Brillenglases.

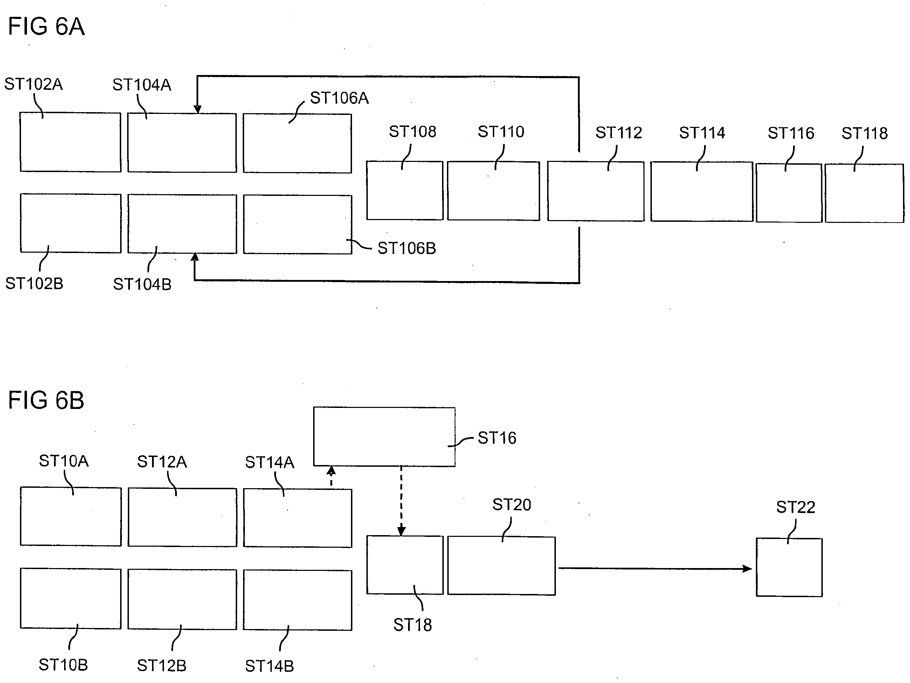

Fig. 6A zeigt ein schematisches Flussdiagramm eines beispielhaften Ablaufs in einem herkömmlichen Verfahren zur Fertigung von Brillenglasrohlingen, sogenannten Blanks, insbesondere in rohrunder Form. Die dargestellten Verfahrensschritte ST102 bis ST118 bilden den Prozesszug der Serienfertigung, während nachfolgende Schritte insbesondere individuell durchgeführt werden. Demgegenüber stellt Fig. 6B Schritte in einem Verfahren zur Herstellung eines Brillenglases gemäß einer bevorzugten Ausführungsform der vorliegenden Erfindung dar.

In einem herkömmlichen Verfahren wird zunächst in einem Schritt ST102A eine Vielzahl von ersten Gießformen, welche insbesondere zur Festlegung der Vorderfläche eines Brillenglases bzw. Blanks dienen, üblicherweise aus Glas hergestellt und in einem Schritt ST104A gelagert, also für die weitere und insbesondere wiederholte Verwendung vorrätig gehalten. Entsprechendes gilt für zweite Gießformen, welche insbesondere zur Festlegung der Rückfläche eines Brillenglases bzw. Blanks dienen, in den Schritten ST102B bzw. ST104B. Die Gießformen werden mit einer Vielzahl unterschiedlicher Krümmungen, insbesondere unterschiedlicher Krümmungsradien ihrer Gießformflächen hergestellt und vorrätig gehalten. Bevor in Schritt ST108 jeweils eine erste Gießform und eine zweite Gießform zusammengefügt werden, um zusammen die Vorder- und Rückfläche eines zu gießenden Blanks festzulegen, werden diese Gießformen im jeweiligen Schritt ST106A bzw. ST106B gereinigt. Nach dem Zusammenfügen und Tapen, wird in Schritt ST108 der zwischen den Gießformen entstandene Gießhohlraum mit einem polimerisierbaren Material gefüllt und in Schritt ST110 polimerisiert, also verfestigt bzw. ausgehärtet. Nach dem Aushärten des so entstandenen Blanks wird dieser in Schritt ST112 entformt. Die wiederverwertbaren Glasformen werden für die nochmalige Verwendung in die Lagerhaltung zurückgeführt. Nach einem Rundieren (Schritt ST114) und einem Kontrollieren (Schritt ST116) des jeweiligen Blanks wird dieser in ein Lager für eine Vielzahl von Blanks aufgenommen und dort für die spätere individuelle Weiterverarbeitung vorrätig gehalten. Die Vielzahl verschiedener Blanks, welche sich insbesondere in ihren Vorderflächen- und/oder Rückflächenkrümmungen, ihrer Dicke, ihrem Durchmesser und/oder ihrem Material voneinander unterscheiden, erfordert eine entsprechende Logistik bei der Lagerverwaltung.

In Fig. 6B sind einige Schritte für ein Verfahren zur Herstellung eines Brillenglases gemäß einer bevorzugten Ausführungsform der vorliegenden Erfindung dem herkömmlichen Verfahren aus Fig. 6A gegenübergestellt. Anders als im herkömmlichen Verfahren werden erfindungsgemäß vorzugsweise bereits die Brillenglasrohlinge nicht mehr in Serienfertigung, sondern individuell gefertigt. Dabei erfolgt eine bestimmte Individualisierung bereits bei der Herstellung der Gießformen für den jeweiligen Brillenglasrohling. In der in Fig. 6B dargestellten Ausführungsform wird hierzu in Schritt ST10A zunächst ein erster Gießformrohling, wie beispielsweise der in Fig. 1A und 1B dargestellte Gießformrohling 10' durch Spritzgießen aus einem Thermoplast hergestellt. Parallel dazu wird in Schritt ST10B ein zweiter Gießformrohling, wie beispielsweise der in Fig. 2A und 2B dargestellte Gießformrohling 24', insbesondere durch Tiefziehen hergestellt. Die beiden Gießformrohlinge werden in den Schritten ST12A bzw. ST12B jeweils formgerandet, d.h. von ihrem peripheren Rand her bis auf die gewünschte Größe und den gewünschten Verlauf des Randes abgetragen. Auf diese Weise entstehen die erste und zweite Gießform, wie beispielsweise die in den Fig. 3A bis 4B dargestellten Gießformen 10 bzw. 24. In den Schritten ST14A bzw. ST14B werden die beiden Gießformen gereinigt.

In einer bevorzugten Ausführungsform wird die erste Gießform in einem optionalen Schritt ST16 durch sogenanntes In-Mold Coating auf dessen erster Gießformfläche mit einer Beschichtung versehen, die nach dem späteren Trennen des Brillenglases von der ersten Gießform am Brillenglas verbleibt und dort insbesondere eine vordere Hartbeschichtung und/oder eine Farbschicht und/oder eine Antireflexschicht bildet. Die beiden Gießformen werden anschließend in einem Schritt ST18 zusammengefügt und insbesondere über eine periphere Verschlusshülse, vorzugsweise in Form eines Bandes, unter Bildung eines Gießhohlraumes zwischen der ersten und zweiten Gießformfläche miteinander verbunden. Dieser Vorgang wird insbesondere auch "Tapen" genannt. Anschließend wird der Gießhohlraum mit einem aushärtbaren Material für das herzustellende Brillenglas gefüllt. Insbesondere ist das Brillenglasmaterial zunächst fließfähig und wird in einem Schritt ST20 verfestigt bzw. ausgehärtet, insbesondere polimerisiert. Dieser Vorgang wird vorzugsweise durch Wärmeeinwirkung gefördert. Dadurch entsteht ein Brillenglasrohling, dessen Vorderfläche hinsichtlich der Form bzw. Krümmung im Wesentlichen bereits der gewünschten, also endgültigen Vorderfläche entspricht, während die Rückfläche insbesondere in einem anschließenden Rezeptschleifverfahren noch individuell angepasst wird. Zunächst wird das Gießpaket bestehend aus den beiden Gießformen und dem dazwischen liegenden Brillenglasrohling in einem Schritt ST22 kontrolliert.

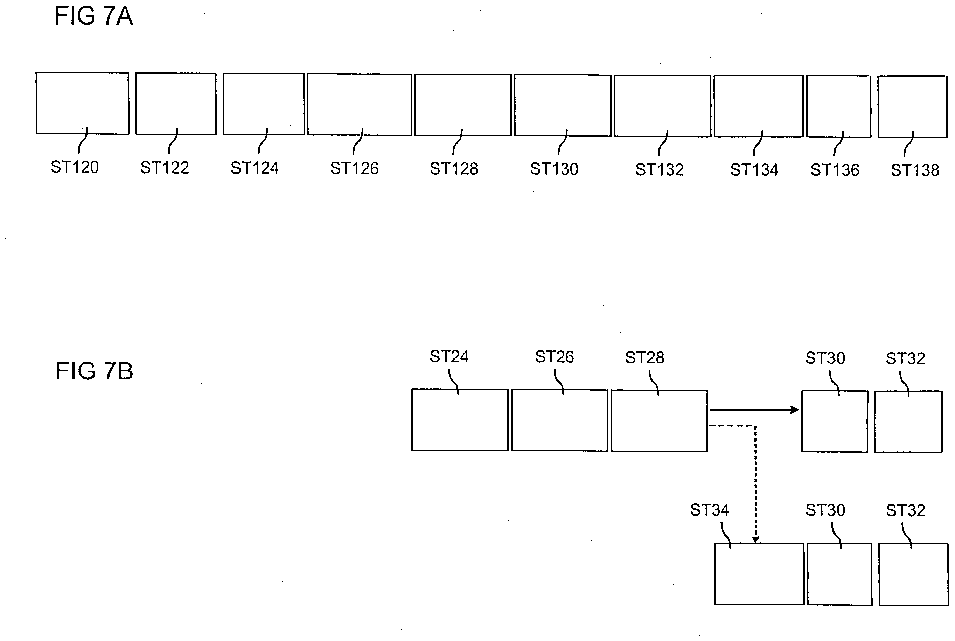

Fig. 7A veranschaulicht den Ablauf einzelner Verfahrensschritte in einem beispielhaften herkömmlichen Verfahren beim Rezeptschleifen eines herkömmlichen Brillenglasrohlings. Dabei wird zunächst in einem Schritt ST120 ein insbesondere rohrunder Brillenglasrohling (Blank) aus einem Lager mit einer Vielzahl von Blanks entnommen und in einem Schritt ST122 auf der Vorderfläche mit einer Schutzfolie versehen. In einem Schritt ST124 wird auf diese Schutzfolie vorzugsweise mittels einer Schwermetalllegierung ein Block (Halteeinrichtung) angebracht. Dieser Block dient anschließend zum Halten, Positionieren und Manipulieren des Brillenglasrohlings für nachfolgende Bearbeitungsschritte. Insbesondere wird der Blank in einem Schritt ST126 rundiert. In einem Schritt ST128 erfolgt anschließend das eigentliche Rezeptschleifen der Rückfläche zur Erreichung der individuell geforderten optischen Wirkung des Brillenglases. In einem Schritt ST130 wird die Rückfläche poliert und das dadurch entstandene rohrunde Brillenglas wird in einem Schritt ST132 graviert, um die typischerweise erforderlichen Bezugspunkte ermitteln bzw. rekonstruieren zu können. Anschließend wird das Brillenglas in einem Schritt ST134 wieder abgeblockt, d.h. der Block wird wieder von der Vorderfläche abgenommen und das Brillenglas wird in einem Schritt ST136 gereinigt und in einem Schritt ST138 kontrolliert.

In Fig. 7B sind einige Schritte für ein Verfahren zur Herstellung eines Brillenglases gemäß einer bevorzugten Ausführungsform der vorliegenden Erfindung dem herkömmlichen Verfahren aus Fig. 7A gegenübergestellt. Nachdem vorzugsweise bereits die vorangegangenen Schritt, einschließlich der Fertigung der Gießformen unter Berücksichtigung individuellen Benutzerdaten, insbesondere in Bezug auf die Auswahl der Basiskurve der Vorderfläche und dem Randformen der Gießformen, individuell für einen Brillenträger, also in Reaktion auf eine Bestellung, erfolgt sind, ist in dieser Ausführungsform keine Lagerhaltung der Brillenglasrohlinge erforderlich. Auch ein Blocken und Rundieren kann entfallen, da der Brillenglasrohling bereits mit der ersten Gießform verbunden ist, welche wiederum bereits ein Blockstück umfasst. Somit wird das Gießpaket bestehend aus den beiden Gießformen und dem dazwischen liegenden Brillenglasrohling in Schritt ST24 direkt einem Vorgang des Rezeptschleifens zugeführt. Dabei wird der Brillenglasrohling mittels des Blockstücks der ersten Gießform in der Schleifanlage fixiert und manipuliert. Vorzugsweise wird beim Rezeptschleifen auch die zweite Gießform abgeschliffen. Anschließend wird das entstandene Brillenglas in Schritt ST26 poliert und in Schritt ST28 graviert um die erforderlichen Bezugspunkte ermitteln bzw. rekonstruieren zu können.

Falls keine weiteren Bearbeitungsschritte am Brillenglas mehr vorgenommen werden sollen, wird das Brillenglas in Schritt ST34 von der ersten Gießform und damit vom Blockstück getrennt und in Schritten ST30 bzw. ST32 gereinigt und kontrolliert. Falls hingegen eine weitere Bearbeitung vorgenommen wird, bleibt das Brillenglas vorzugsweise mit der ersten Gießform und damit dem Blockstück verbunden und eine Reinigung und Kontrolle in den Schritten ST30 bzw. ST32 erfolgt währen das Brillenglas mit der ersten Gießform fest verbunden ist.

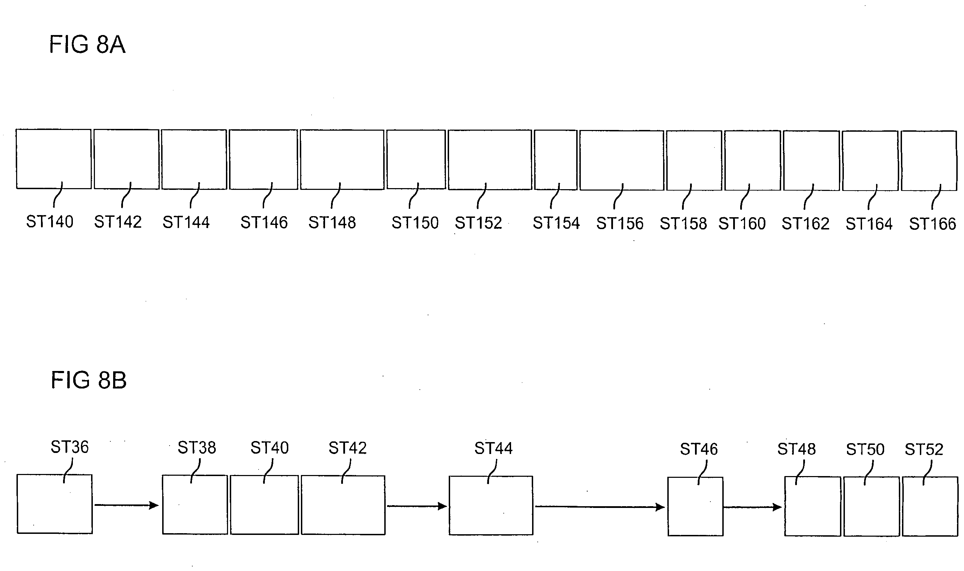

Fig. 8A veranschaulicht den Ablauf einzelner Verfahrensschritte in einem beispielhaften herkömmlichen Verfahren beim Beschichten und Randen eines herkömmlichen Brillenglases. In einem Schritt ST140 wird das Brillenglas insbesondere in einem Tauchbad gefärbt. Anschließend erfolgt in Schritt ST142 ein Wechsel des Werkstückträgers für die nachfolgenden Behandlungen des Brillenglases. Insbesondere wird das Brillenglas in Schritt ST144 gereinigt und in Schritt ST146 wird die Oberfläche für den anschließenden Tauchlackvorgang in Schritt ST148 aktiviert und mit einem Tauchlack versehen. Nach einem Kalottieren ST150 erhält das Brillenglas in einem Vakuumbeschichtungsprozess ST152 eine Antireflexbeschichtung auf einer der beiden Brillenglasfläche, bevor es nach einem Wenden ST154 in einem Vakuumbeschichtungsprozess ST156 auch auf der anderen Brillenglasfläche eine Antireflexbeschichtung erhält. Abschließend wird das Brillenglas kontrolliert ST158. Zum Randen wird das Brillenglas in Schritt ST160 nochmals geblockt, d.h. auf der Vorderfläche wird nochmals ein Block beispielsweise mittels einer Schwermetalllegierung oder einem Klebepad angebracht, bevor das Brillenglas für die Montage in einer Brille in den Schritten des Formrandens ST162 und/oder Rillens bzw. Bohrens ST164 vorbereitet werden. Schließlich wird das Brillenglas in Schritt ST166 wieder abgeblockt.

In Fig. 8B sind einige Schritte für ein Verfahren zur Herstellung eines Brillenglases gemäß einer bevorzugten Ausführungsform der vorliegenden Erfindung dem herkömmlichen Verfahren aus Fig. 8A gegenübergestellt. Dabei können eine Reihe von Manipulationsschritten, insbesondere die Wechsel des Werkstückträgers, entfallen oder wesentlich vereinfacht werden, da die Manipulation des Brillenglases, insbesondere dessen Fixierung, mittels der vorzugsweise während des gesamten Prozesses am Brillenglas verbleibenden ersten Gießform erfolgt. So wird das Brillenglas in Schritt ST36 insbesondere durch Thermosublimation gefärbt und in Schritt ST38 gereinigt. In einem weiteren bevorzugten Verfahrensschritt ST40 wird zumindest die Rezeptfläche des Brillenglases aktiviert, um anschließend in einem bevorzugten Schritt ST42 ein Spin-Coating aufzubringen. Dabei wird das Brillenglas vorzugsweise stets mittels des Blockstücks der ersten Gießform in der Anlage gehalten und/oder manipuliert. In einem weiteren bevorzugten Schritt ST44 erhält das Brillenglas, wiederum vorzugsweise durch einen Spin-Prozess, eine Antireflexbeschichtung auf der Rezeptfläche. Abschließend erfolgt eine Kontrolle ST46 des Brillenglases. Auch für die nachfolgenden Schritte des Formrandens ST48 und/oder des Rillens und/oder Bohrens ST50 verbleibt das Brillenglas vorzugsweise an der ersten Gießform und wird mittels des Blockstücks der ersten Gießform gehalten und/oder manipuliert. Vorzugsweise wird erst das fertige Brillenglas in Schritt ST52 von der ersten Gießform gelöst, also abgeblockt. Damit ist vorzugsweise während der gesamten Brillenglasherstellung kein herkömmlicher Blockvorgang mehr erforderlich. Außerdem wird der Materialverbrauch für das Brillenglas wesentlich reduziert. All dies führt im Endeffekt zu einer wesentlichen Reduktion der Herstellungskosten. Außerdem wird durch die Verwendung der ersten Gießform als Halteeinrichtung (Block) die Präzision der Positionierung des Brillenglases in den einzelnen Bearbeitungsschritten wesentlich verbessert, was wiederum zu einer Verbesserung der Präzision und Qualität des Brillenglases insgesamt führt.

### Bezugszeichenliste

- 10: erste Gießform
- 10': erster Gießformrohling
- 12: erste Gießformschale
- 14: erste Gießformfläche
- 16: peripherer Rand des ersten Gießformrohlings
- 18: Blockstück
- 20: Versteifungsrippen
- 22: Poren
- 24: zweite Gießform
- 24': zweiter Gießformrohling
- 26: zweite Gießformfläche
- 28: peripherer Rand des zweiten Gießformrohlings
- 30: peripherer Rand der ersten Gießform
- 32: peripherer Rand der zweiten Gießform
- 34: Gießhohlraum
- 36: Verschlusshülse, Band
- 38: Brillenglasrohling
- 40: Schleifwerkzeug
- 42: Brillenglas
- 44: Rezeptfläche
- 46: Polierwerkzeug
- 48: polierte Rezeptfläche
- 50: Gravierwerkzeug
- 52: Beschichtung, Farbschicht
- 54: Spincoater
- 56: Randschleifwerkzeug
- 58: Rillwerkzeug
- 60: Bohrer
- 62: Abblockwerkzeug

## Patentansprüche

1. Verfahren zur Herstellung eines Brillenglases (42) für einen Brillenträger, umfassend:
- Bereitstellen einer ersten Gießform (10) und einer zweiten Gießform, wobei die erste Gießform (10) ein Blockstück (18) umfasst;
- Zusammenfügen der ersten und zweiten Gießform unter Bildung eines Gießhohlraum (34);
- Ausgießen des Gießhohlraums (34) zur Ausbildung eines Brillenglasrohlings (38); und
- Rezeptschleifen einer Fläche des Brillenglasrohlings (38) zur Herstellung einer Rezeptfläche (44, 48) des Brillenglases (42), während der Brillenglasrohling (38) mit der ersten Gießform (10) verbunden bleibt.

2. Verfahren nach Anspruch 1, umfassend ein Erfassen von Randformdaten des für den Brillenträger herzustellenden Brillenglases (42), wobei das Bereitstellen der ersten Gießform (10) und/oder der zweiten Gießform (24) ein Herstellen der ersten bzw. zweiten Gießform aus einem ersten Gießformrohling (10') bzw. einem zweiten Gießformrohling (24') durch Abtragen zumindest eines Teils des peripheren Randes (16; 28) des entsprechenden Gießformrohlings (10'; 24') in Abhängigkeit von den erfassten Randformdaten umfasst.

3. Verfahren nach einem der vorangegangenen Ansprüche, wobei das Bereitstellen der ersten Gießform (10) ein Spritzgießen derart umfasst, dass dabei eine eine erste Gießformfläche (14) bildende erste Gießformschale (12) der ersten Gießform (10) und das von der ersten Gießformfläche (14) abgewandte Blockstück (18) einstückig ausgebildet werden.

4. Verfahren nach einem der vorangegangenen Ansprüche, wobei das Bereitstellen der zweiten Gießform (24) ein Tiefziehen umfasst.

5. Verfahren nach einem der vorangegangenen Ansprüche, welches ein Formranden des Brillenglases (42) umfasst, während das Brillenglas (42) mit der der Rezeptfläche (44, 48) gegenüberliegenden Fläche zur ersten Gießform (10) verbunden bleibt.

6. Verfahren nach einem der vorangegangenen Ansprüche, welches ein Beschichten des Brillenglases (42) auf der Rezeptfläche (44, 48) umfasst, während das Brillenglas (42) mit der der Rezeptfläche (44, 48) gegenüberliegenden Fläche zur ersten Gießform (10) verbunden bleibt.

7. Verfahren nach einem der vorangegangenen Ansprüche, welches vor dem Zusammenfügen der ersten (10) und zweiten Gießform (24) ein Beschichten einer ersten Gießformfläche (14) der ersten Gießform (10) mit einer Beschichtung umfasst, die nach einem Ablösen des Brillenglases (42) von der ersten Gießform (10) zumindest teilweise auf dem Brillenglas (42) verbleibt, um dort eine Farbbeschichtung und/oder eine Hartbeschichtung und/oder eine Antireflexbeschichtung zu bilden.

8. Verfahren nach einem der Ansprüche 1 bis 7, umfassend ein Erfassen von Benutzerdaten für ein herzustellendes Brillenglas eines Benutzers, wobei das Bereitstellen einer ersten Gießform ein Auswählen eines ersten Gießformrohlings aus einem Satz von Gießformrohlingen unter Berücksichtigung der erfassten Benutzerdaten umfasst, wobei der Satz von Gießformrohlingen eine erste Serie von Gießformrohlingen umfasst, welche eine Vielzahl von ersten Gießformrohlingen (10') umfasst, von denen jeder Gießformrohling (10') eine erste Gießformfläche (14) und ein von der ersten Gießformfläche (14) abgewandtes Blockstück (18) umfasst, wobei die Gießformrohlinge (10') übereinstimmende Blockstücke (18) und zumindest teilweise unterschiedliche Krümmungen der ersten Gießformfläche (14) aufweisen.

9. Verfahren nach Anspruch 8, wobei der Satz von Gießformrohlingen außerdem eine zweite Serie von Gießformrohlingen umfasst, welche eine Vielzahl von zweiten Gießformrohlingen (24') mit jeweils einer zweiten Gießformfläche (26) umfasst, wobei die Gießformrohlinge (24') zumindest teilweise unterschiedliche Krümmungen der zweiten Gießformfläche (26) aufweisen.

10. Verfahren nach Anspruch 8 oder 9, wobei die ersten Gießformrohlinge Versteifungsrippen aufweisen.

11. Verfahren nach einem der Ansprüche 1 bis 7, umfassend ein Erfassen von Benutzerdaten für ein herzustellendes Brillenglas eines Benutzers, wobei das Bereitstellen einer ersten Gießform umfasst:
- Auswählen einer Spritzgussform aus einem Satz von Spritzgusswerkzeugen unter Berücksichtigung der erfassten Benutzerdaten, wobei der Satz von Spritzgusswerkzeugen eine Serie von Spritzgussformen zum Herstellen einer ersten Serie von Gießformrohlingen für die Herstellung von Brillengläsern umfasst, welche eine Vielzahl von ersten Gießformrohlingen umfasst, von denen jeder Gießformrohling eine erste Gießformfläche und ein von der ersten Gießformfläche abgewandtes Blockstück umfasst, wobei die Serie von Spritzgussformen eine Vielzahl von Spritzgussformen umfasst, von denen jede Spritzgussform zum Spritzgießen eines Gießformrohlings der ersten Serie von Gießformrohlingen derart ausgelegt ist, dass die durch verschiedene Spritzgussformen hergestellten Gießformrohlinge übereinstimmende Blockstücke und zumindest teilweise unterschiedliche Krümmungen der ersten Gießformfläche aufweisen; und
- Herstellen der ersten Gießform, wobei das Herstellen der ersten Gießform ein Spritzgießen mittels der ausgewählten Spritzgussform umfasst.

## Claims

1. A method for producing a spectacle lens (42) for a spectacle wearer, comprising:
- providing a first casting mold (10) and a second casting mold, wherein the first casting mold (10) comprises a block piece (18);
- joining the first and second casting molds to form a casting cavity (34);
- pouring out the casting cavity (34) to form a spectacle lens blank (38); and
- prescription grinding of a surface of the spectacle lens blank (38) to produce a prescription surface (44, 48) of the spectacle lens (42), while the spectacle lens blank (38) remains connected to the first casting mold (10).

2. The method according to claim 1, comprising recording edge shape data of the spectacle lens (42) to be manufactured for the spectacle wearer, wherein the provision of the first casting mold (10) and / or the second casting mold (24) involves manufacturing the first or second casting mold from a first casting mold blank (10') or a second casting mold blank (24') by removing at least part of the peripheral edge (16; 28) of the corresponding casting mold blank (10'; 24') as a function of the detected edge shape data.

3. The method according to any one of the preceding claims, wherein the provision of the first casting mold (10) comprises an injection molding such that a first casting mold shell (12) of the first casting mold (10), which forms a first casting mold surface (14) and the block piece (18) facing away from the first casting mold surface (14) are integrally formed.

4. The method according to any one of the preceding claims, wherein the provision of the second casting mold (24) comprises deep drawing.

5. The method according to any one of the preceding claims, which comprises a molding edge of the spectacle lens (42), while the spectacle lens (42) remains connected to the first casting mold (10) with the surface opposite the prescription surface (44, 48).

6. The method according to any one of the preceding claims, which comprises coating the spectacle lens (42) on the prescription surface (44, 48), while the spectacle lens (42) remains connected to the first casting mold (10) with the surface opposite the prescription surface (44, 48).

7. The method according to any one of the preceding claims, which, prior to joining the first (10) and second casting molds (24), comprises coating a first casting mold surface (14) of the first casting mold (10) with a coating which, after detachment of the spectacle lens (42) of the first casting mold (10) remains at least partially on the spectacle lens (42) in order to form a color coating and / or a hard coating and / or an anti-reflective coating there.

8. The method according to any one of claims 1 to 7, comprising a recording of user data for a spectacle lens of a user to be manufactured, wherein the provision of a first casting mold comprises selecting a first casting mold blank from a set of casting mold blanks taking into account the captured user data, which comprises a plurality of first casting mold blanks (10'), of which each casting mold blank (10') comprises a first casting mold surface (14) and a block piece (18) facing away from the first casting mold surface (14), wherein the casting mold blanks (10') have matching block pieces (18) and at least partially have different curvatures of the first casting mold surface (14).

9. The method of claim 8, wherein the set of casting mold blanks further comprises a second series of casting mold blanks which comprises a plurality of second casting mold blanks (24') each having a second casting mold surface (26), wherein the casting mold blanks (24') have at least partially different curvatures of the second mold surface (26).

10. The method according to claim 8 or 9, wherein the first casting mold blanks have stiffening ribs.

11. The method according to any one of claims 1 to 7, comprising acquiring user data for a spectacle lens of a user to be manufactured, wherein providing a first casting mold comprises:
- selecting an injection mold from a set of injection molding tools taking into account the recorded user data, wherein the set of injection molding tools comprises a series of injection molds for producing a first series of casting mold blanks for the production of spectacle lenses, which comprises a plurality of first casting mold blanks, each of the casting mold blanks comprises a first casting mold surface and a block piece facing away from the first casting mold surface, wherein the series of injection molds comprises a plurality of injection molds, each of which is designed for injection molding of a casting mold blank of the first series of casting mold blanks such that the casting mold blanks produced by different injection molds comprise corresponding block pieces and at least partially different curvatures of the first casting mold surface; and
- production of the first casting mold, wherein the production of the first casting mold comprises an injection molding by means of the selected injection mold.

## Revendications

1. Procédé de fabrication d'un verre de lunettes (42) pour un porteur de lunettes, comprenant:
- fournir un premier moule de coulée (10) et un deuxième moule de coulée, dans lequel le premier moule de coulée (10) comprend une pièce de bloc (18);
- joindre les premier et second moules de coulée pour former une cavité de coulée (34);
- verser la cavité de coulée (34) pour former une ébauche de verre de lunettes (38); et
- meulage de prescription d'une surface de l'ébauche de verre de lunettes (38) pour produire une surface de prescription (44, 48) du verre de lunettes (42), tandis que l'ébauche de verre de lunettes (38) reste reliée au premier moule de coulée (10).

2. Procédé selon la revendication 1, comprenant l'enregistrement des données de forme de bord du verre de lunettes (42) à fabriquer pour le porteur de lunettes, dans lequel la fourniture du premier moule de coulée (10) et / ou du deuxième moule de coulée (24) implique la fabrication du premier ou du deuxième moule de coulée à partir d'une première ébauche de moule de coulée (10') ou d'une deuxième ébauche de moule de coulée (24') en enlevant au moins une partie du bord périphérique (16; 28) de l'ébauche de moule de coulée correspondante (10'; 24') en fonction des données de forme de bord détectées.

3. Procédé selon l'une quelconque des revendications précédentes, dans lequel la fourniture du premier moule de coulée (10) comprend un moulage par injection tel qu'une première coquille de moule de coulée (12) du premier moule de coulée (10), qui forme une première surface de moule de coulée (14) et la pièce de bloc (18) opposée à la première surface de moule de coulée (14) sont formées d'un seul tenant.

4. Procédé selon l'une quelconque des revendications précédentes, dans lequel la fourniture du deuxième moule de coulée (24) comprend un emboutissage profond.

5. Procédé selon l'une quelconque des revendications précédentes, qui comprend un bord de moulage du verre de lunettes (42), tandis que le verre de lunettes (42) reste relié au premier moule de coulée (10) avec la surface opposée à la surface de prescription (44, 48).

6. Procédé selon l'une quelconque des revendications précédentes, qui comprend le revêtement du verre de lunettes (42) sur la surface de prescription (44, 48), tandis que le verre de lunettes (42) reste relié au premier moule de coulée (10) avec la surface opposée à la surface de prescription (44, 48).

7. Procédé selon l'une quelconque des revendications précédentes, qui, avant de joindre les premier (10) et second moules de coulée (24), comprend le revêtement d'une première surface de moule de coulée (14) du premier moule de coulée (10) avec un revêtement qui, après décollement du verre de lunettes (42) du premier moule de coulée (10) reste au moins partiellement sur le verre de lunettes (42) pour former un revêtement coloré et / ou un revêtement dur et / ou un revêtement anti-réfléchissant là.

8. Procédé selon l'une quelconque des revendications 1 à 7, comprenant un enregistrement de données d'utilisateur pour un verre de lunettes d'un utilisateur à fabriquer, dans lequel la fourniture d'un premier moule de coulée comprend la sélection d'une première ébauche de moule de coulée parmi un ensemble d'ébauches de moule de coulée tenant compte des données utilisateur capturées, qui comprennent une pluralité de premières ébauches de moule de coulée (10'), dont chaque ébauche de moule de coulée (10') comprend une première surface de moule de coulée (14) et un bloc (18) faisant face à l'opposé de la première surface de moule de coulée (14), dans lequel les ébauches de moule de coulée (10') ont des blocs correspondants (18) et ont au moins partiellement des courbures différentes de la première surface de moule de coulée (14).

9. Procédé selon la revendication 8, dans lequel l'ensemble d'ébauches de moule de coulée comprend en outre une deuxième série d'ébauches de moule de coulée qui comprend une pluralité de deuxièmes ébauches de moule de coulée (24') ayant chacune une deuxième surface de moule de coulée (26), dans lequel les ébauches de moule de coulée (24 ') ont des courbures au moins partiellement différentes de la seconde surface de moule (26).

10. Procédé selon la revendication 8 ou 9, dans lequel les premières ébauches de moule de coulée comportent des nervures de rigidification.

11. Procédé selon l'une quelconque des revendications 1 à 7, comprenant l'acquisition de données d'utilisateur pour un verre de lunettes d'un utilisateur à fabriquer, dans lequel la fourniture d'un premier moule de coulée comprend:
- sélectionner un moule par injection à partir d'un ensemble d'outils de moulage par injection en tenant compte des données utilisateur enregistrées, l'ensemble d'outils de moulage par injection comprenant une série de moules par injection pour produire une première série d'ébauches de moules de coulée pour la production de verres de lunettes, qui comprend une pluralité de premières ébauches de moule de coulée, chacune des ébauches de moule de coulée comprend une première surface de moule de coulée et une pièce de bloc opposée à la première surface de moule de coulée, dans lequel la série de moules d'injection comprend une pluralité de moules d'injection, chacun desquels est conçu pour le moulage par injection d'une ébauche de moule de coulée de la première série d'ébauches de moule de coulée de telle sorte que les ébauches de moule de coulée produites par différents moules d'injection comprennent des pièces de bloc correspondantes et au moins partiellement des courbures différentes de la première surface de moule de coulée; et
- réalisation du premier moule de coulée, dans lequel la production du premier moule de coulée comprend un moulage par injection au moyen du moule d'injection sélectionné.
